# EUROPÄISCHE PATENTSCHRIFT

(11) **EP 1 681 208 B1**
(45) Veröffentlichungstag und Bekanntmachung des Hinweises auf die Patenterteilung: **01.10.2008**
(21) Anmeldenummer: 06000389.4
(22) Anmeldetag: 10.01.2006
(51) Int. Cl.: B60R 19/34

(54) **Stossfänger für ein Kraftfahrzeug**
Bumper for a motor vehicle
Poutre de pare-chocs pour véhicule automobile

(30) Priorität: 12.01.2005 DE 102005001594
(43) Veröffentlichungstag der Anmeldung: 19.07.2006
(73) Patentinhaber: Benteler Automobiltechnik GmbH, 33104 Paderborn (DE)
(72) Erfinder: Böhmer, Werner, 34439 Willebadeseen (DE); Kröning, Achim, 33102 Paderborn (DE); Wang, Hui, 33102 Paderborn (DE)
(74) Vertreter: Griepenstroh, Jörg

(56) Entgegenhaltungen:
- EP-A1- 0 546 352
- DE-A1- 10 206 011
- DE-A1- 10 259 429
- DE-A1- 19 631 901
- DE-C2- 4 340 033
- FR-A1- 2 856 023
- US-B1- 6 364 384

## Beschreibung

Die Erfindung betrifft einen Stoßfänger für ein Kraftfahrzeug gemäß den Merkmalen im Oberbegriff des Patentanspruchs 1.

Ein ähnlicher Stossfänger ist beispielsweise aus der FR-2 856 023 bekannt.

Aus der DE 102 06 011 A1 ist eine Schutzvorrichtung für Kraftfahrzeuge bekannt mit einem einschaligen, im Querschnitt U-förmig konfigurierten

Stoßfängerquerträger und mit einer Abschlepphülse, welche sich zwischen einem vorderseitigen Steg des Stoßfängers und den sich oben und unten hieran anschließenden Schenkeln erstreckt. Die Abschlepphülse ist im Bereich eines Zuggurtes angeordnet, wodurch die Abschlepphülse eine zusätzliche Verstärkung erfährt.

Es ist bekannt, Profile an höher belasteten Stellen mit Verstärkungsblechen zu verschließen und diese Verstärkungsbleche mit Aussparungen zu versehen, um Spannungsspitzen zu vermeiden. In Bezug auf eine Hinterachse wird in der DE 83 15 313 U1 daher vorgeschlagen, bei im Querschnitt grundsätzlich offenen Torsionsprofilen einer Hinterachse die beiden sich gegenüber liegenden Schenkel des Profils über ein Schließblech miteinander zu verbinden, wobei die Enden des Schließblechs mit bogenförmigen Aussparungen versehen sein können, um schroffe Übergänge des Widerstandsmomentes zu vermeiden. Bei einem Seitenaufprallträger für einen Personenkraftwagen wurde ebenfalls vorgeschlagen, Schließbleche mit bogenförmigen Aussparungen vorzusehen (DE 43 40 033 C2).

Das Querträgersystem eines Kraftfahrzeugs erlangt bezüglich derzeit geltender Gesetzesanforderungen im Bereich des Low-Speed-Tests (bis 16 km/h) eine besondere Bedeutung. Der Stoßfängerquerträger mit angeschlossenen Crashboxen im Anbindungsbereich an die Längsträger ist dafür verantwortlich, dass beim Low-Speed-Test die Barriere oder das Pendel möglichst wenig in das Fahrzeug eindringt und die Fahrzeugstruktur möglichst keine Beschädigungen davonträgt. Die Konfiguration des Stoßfängerquerträgers ist daher von besonderer Bedeutung für das auftretende Schadensbild und damit die Schadenshöhe. Moderne Systeme kombinieren daher anforderungsgerecht gestaltete Stoßfängerquerträger und entsprechende Crashboxen, die zwischen dem Stoßfängerquerträger und den Längsträgern angeordnet werden oder Bestandteil des Längsträgers sind.

Auch an die Abschleppbuchse als Bestandteil eines Stoßfängerquerträgers werden besondere Anforderungen gestellt, die vom Gesetzgeber sowie in noch schärferer Definition vom Fahrzeughersteller vorgegeben werden. Ein Bergungsversuch, Abschleppprüfungen aus unterschiedlichen Winkelpositionen und Schiffverzurrversuche gehören in dieses Anforderungspaket.

Sollte es nicht gelingen, die Position der Abschleppeinrichtung in den für die Funktion günstigen Bereich der Crashbox zu verlegen, so wird diese zumeist aus Designgründen in den Stoßfängerquerträger integriert. Hieraus ergibt sich das Problem, dass die Abschleppbuchsen bei gewichtsoptimierten einschaligen Stoßfängerquerträgern, d.h. bei offenen Profilen, durch ein zusätzliches Abschleppverstärkungsblech auf der profiloffenen Seite gestützt werden müssen. Das Abschleppverstärkungsblech hat die Funktion, den profiloffenen Bereich des Stoßfängerquerträgers für den Abschlepptest zu versteifen. Gleichzeitig wird durch das lokale Schließen des Profils erreicht, dass sich die Biegesteifigkeit des Stoßfängerquerträgers bei einem Crash maßgeblich erhöht.

Die lokale Erhöhung der Biegesteifigkeit bewirkt einen nicht unerheblichen Steifigkeitssprung, der unter bestimmten Bedingungen die Ursache dafür sein kann, dass bei Crashversuchen ein strukturelles Versagen in Form eines Risses im Bereich der nach außen ausgestellten Flansche des Stoßfängerquerträgers initiiert wird. Die Spannungsspitzen im Verbindungsbereich zwischen dem Abschleppverstärkungsblech und dem Stoßfängerquerträger können das Energieaufnahmevermögen des Materials übersteigen, was zur Rissbildung und damit zum Versagen des Stoßfängerquerträgers führt.

Hiervon ausgehend liegt der Erfindung die Aufgabe zugrunde, einen Stoßfänger mit einem im Querschnitt U-förmig konfigurierten Stoßfängerquerträger aufzuzeigen, bei welchem zwar ein Abschleppverstärkungsblech zur Anbindung einer Abschleppbuchse zum Einsatz kommt, allerdings Steifigkeitssprünge soweit reduziert werden können, dass rissinitiierende Spannungsspitzen vermieden werden.

Diese Aufgabe wird bei einem Stoßfänger mit den Merkmalen des Patentanspruchs 1 gelöst.

Wesentlich ist, dass das Abschleppverstärkungsblech in seinem mittleren Bereich wenigstens einer seiner sich zwischen den Stegen erstreckenden Längskanten eine Einschnürung aufweist. Versuche haben gezeigt, dass durch eine angepasste Einschnürung Steifigkeitssprünge zwar nicht vollständig vermieden, jedoch auf unkritische Größenordnungen reduziert werden können, so dass diese keine Risse mehr initiieren. Der Stoßfängerquerträger erfüllt dadurch die Anforderungen der Crashtests wesentlich besser. Dies wird dadurch erreicht, dass die Schenkel des im Querschnitt U-förmig konfigurierten Stoßfängerquerträgers beim Crash geringfügig aufgespreizt werden, wobei die den Einschnürungen benachbarten, mit den Flanschen der Schenkel verbundenen Flanken dieser Aufspreizbewegung folgen, so dass der Steifigkeitssprung durch das Aufspreizen der Einschnürungen wirksam abgedämpft wird.

Wesentlich Im Rahmen der Erfindung ist, dass das Abschleppverstärkungsblech über mehrere im Abstand zueinander angeordnete Schweißpunkte mit den an den Schenkeln angeformten Flanschen verbunden ist, wobei die der Einschnürung benachbarten Flanken eine Länge aufweisen, die mindestens so groß ist, wie der Abstand zwischen zwei benachbarten Schweißpunkten.

Des Weiteren wird es als zweckmäßig erachtet, wenn die über die Länge einer Flanke gemessene Breite im auf ihre Länge bezogenen Durchschnitt nicht größer ist, als die doppelte Breite des Flansches, an dem sie befestigt ist. Mit anderen Worten sollen die Flanken eine gewisse Mindestlänge haben und sollten eine maximale Breite nicht überschreiten, um in Abstimmung auf den U-förmig profilierten Stoßfängerquerträger bei einem Crash hinreichend aufgespreizt werden zu können.

Es ergibt sich eine Vielzahl von Möglichkeiten, die Einschnürungen und auch Flanken zu gestalten. Entscheidend ist die Tatsache, dass an einer Längskante des Abschleppverstärkungsblechs Flanken in Form von quasi zungenartigen Abschnitten vorhanden sind, die eine Aufweitung ermöglichen. Die Einschnürung kann zu diesem Zweck lediglich ein schmaler Einschnitt sein, wobei es jedoch als zweckmäßig angesehen wird, breitere Einschnürungen vorzusehen. Aus Gründen der Gewichtsersparnis sollte die Einschnürung im Rahmen der konstruktiven Möglichkeiten so groß wie möglich gestaltet sein. Insbesondere U-förmige Einschnürungen mit Flanken konstanter Breite, wie auch parabelförmige Einschnürungen mit sich über ihre Länge ändernder Breite werden als vorteilhaft angesehen. Die Länge und Breite jeder einzelnen Flanke kann auf die Konfiguration des Flansches abgestimmt sein, mit dem sie verbunden ist. Grundsätzlich wird es als vorteilhaft angesehen, wenn die Flanken einer Längsseite die gleiche Länge und die gleiche Breite aufweisen, d.h. spiegelsymmetrisch ausgebildet sind.

Die Flansche können im Anbindungsbereich der Abschleppverstärkungsbleche verbreitert ausgeführt sein. Die verbreiterten Flansche ermöglichen eine hinreichende Krafteinleitung über die Abschlepphülse und das daran angeschlossene Abschleppverstärkungsblech. Aus Symmetriegründen kann der Stoßfängerquerträger grundsätzlich mit zwei Abschleppverstärkungsblechen versehen sein, die spiegelsymmetrisch zur Mittelquerachse des Stoßfängerquerträgers angeordnet sind. Einerseits ist es auf diese Weise möglich, einen gleichmäßigen Verlauf der Biegesteifigkeit zu erzielen. Zugleich kann man sich die vorteilhaften Eigenschaften des Abschleppverstärkungsblechs in Funktion eines lokalen Schließblechs zu Nutze machen, das ohne Einleitung von Spannungsspitzen auch ohne Abschlepphülse geeignet ist, das Aufspreizen des U-förmig profilierten Stoßfängerquerträgers zu vermeiden.

Vorzugsweise sind die Abschleppverstärkungsbleche in gleichem Abstand benachbart der Crashboxen angeordnet. Grundsätzlich ist es aber auch denkbar, dass die Abschleppverstärkungsbleche in unterschiedlichen Abständen zur Mittelquerebene des Stoßfängerquerträgers platziert sind. Insbesondere ist es aus Gründen der Krafteinleitung zweckmäßig, die Abschleppeinheit, d.h. die Abschlepphülse und das Abschleppverstärkungsblech, so nah wie möglich an dem endseitigen Deformationselement anzuordnen, um die Abschleppkräfte möglichst direkt über die Deformationselemente in die Längsträger des Kraftfahrzeugs einzuleiten. Dementsprechend kann das zweite Abschleppverstärkungsblech, das diese Funktion nicht erfüllen muss, in größerem Abstand zu dem Deformationselement am anderen Ende des Stoßfängerquerträgers platziert sein.

Die Erfindung wird nachfolgend anhand von in schematischen Zeichnungen dargestellter Ausführungsbeispiele näher erläutert. Es zeigen:
- Figur 1: in perspektivischer rückwärtiger Ansicht einen Endabschnitt eines aus des Stand der Technik bekannten Stoßfängerquerträgers;
- Figur 2: eine rückwärtige Ansicht eines Endabschnitts eines Stoßfängerquerträgers mit einer ersten Ausführungsform eines Abschleppverstärkungsblechs;
- Figuren 3 und 4: eine Stoßfängeranordnung in perspektivischer Darstellung in Blickrichtung von schräg vorne und schräg hinten;
- Figur 5: einen vergrößerten Ausschnitt des Stoßfängers der Figur 4 und
- Figur 6: in rückwärtiger Ansicht einen Endabschnitt eines Stoßfängers mit einer dritten Ausführungsform eines Abschleppverstärkungsblechs.

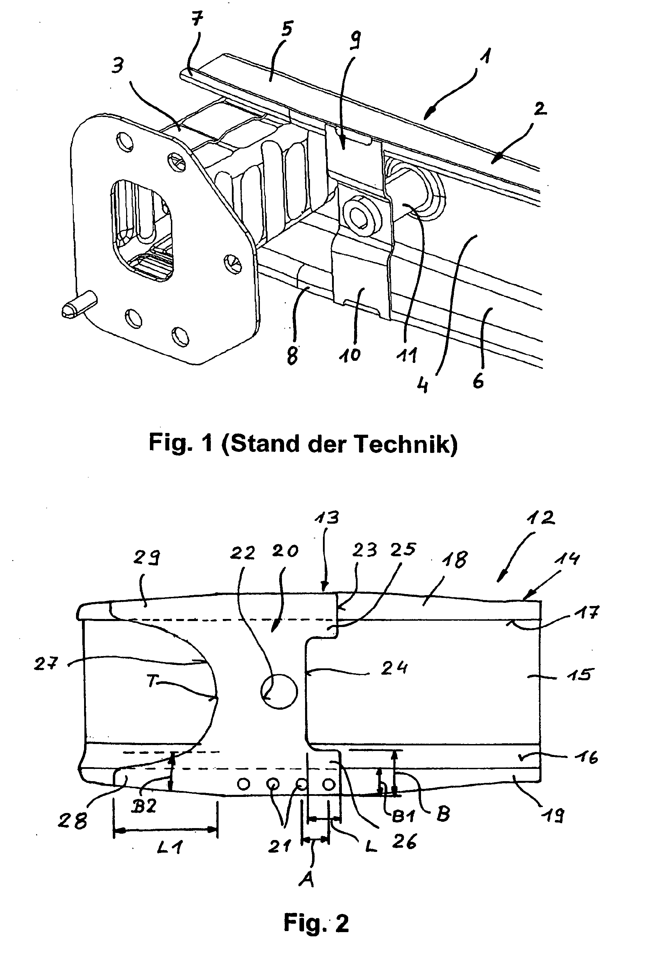

Figur 1 zeigt einen Abschnitt eines aus dem Stand der Technik bekannten Stoßfängers 1 mit einem einschaligen, im Querschnitt U-förmig konfigurierten Stoßfängerquerträger 2, welcher an seinem Ende ein Deformationselement 3 aufweist, über das er an einem nicht näher dargestellten Längsträger eines Kraftfahrzeugs befestigt werden kann. Das U-Profil des Stoßfängerquerträgers 2 ergibt sich aus einem frontseitigen Steg 4, sich hieran anschließenden oberen und unteren Schenkeln 5, 6, die sich in Richtung des Deformationselements 3 erstrecken. An die Schenkel 5, 6 schließen sich jeweils nach außen ausgestellte Flansche 7, 8 an. Ferner ist eine Abschleppeinrichtung 9 mit einem Abschleppverstärkungsblech 10 und einer daran angeschlossenen Abschlepphülse 11 zu erkennen. Die Abschlepphülse 11 erstreckt sich zwischen dem Steg 4 und dem die Flansche 7, 8 verbindenden Abschleppverstärkungsblech 10. Dieses Abschleppverstärkungsblech ist im Rahmen der Erfindung weiter entwickelt worden und wird nachfolgend in erfindungsgemäßer Ausgestaltung in Figur 2 erläutert.
Figur 2 zeigt die rückwärtige Ansicht eines erfindungsgemäßen Stoßfängers 12 im Bereich einer Abschleppeinrichtung 13. Der Stoßfänger 12 umfasst einen Stoßfängerquerträger 14 mit einem frontseitigen Steg 15 und sich hieran anschließenden oberen und unteren Schenkeln 16, 17, so dass sich insgesamt ein einschaliges im Querschnitt U-förmiges Profil ergibt. An die Schenkel 16, 17 schließen sich wiederum nach außen ausgestellte Flansche 18, 19 an, so dass das U-förmige Profil einschließlich der Flansche 18, 19 auch als Hutprofil bezeichnet werden kann. Das im Querschnitt offene Profil ist durch ein Abschleppverstärkungsblech 20 lokal geschlossen. Das Abschleppverstärkungsblech 20 ist zu diesem Zweck über mehrere Schweißpunkte 21, die beispielhaft nur im Bereich des unteren Flansches 19 dargestellt sind, mit dem Stoßfängerquerträger 14 verbunden. In eine zentrale Öffnung 22 ist in nicht näher dargestellter Weise eine Abschlepphülse einsetzbar, so dass die Abschlepphülse einerseits durch das Abschleppverstärkungsblech 20 und andererseits durch den Steg 15 gehalten ist.

Wesentlich bei dem dargestellten Abschleppverstärkungsblech 20 ist, dass im mittleren Bereich, der sich zwischen den Stegen 16, 17 bzw. Flanschen 18, 19 erstreckenden Längskante 23 eine Einschnürung 24 ausgebildet ist. Die Einschnürung 24 ist U-förmig konfiguriert und ist beiderseits von zwei in ihrer Geometrie identisch ausgebildeten Flanken 25, 26 benachbart. Aufgrund der U-förmigen Konturierung besitzen die Flanken 25, 26 die gleiche Breite B sowie die gleiche Länge L. Die Breite B der Flanken 25 ist diesem Ausführungsbeispiel nahezu doppelt so groß wie die Breite B1 der Flansche 18, 19. Die Breite B1 der Flansche 18, 19 ist in diesem Ausführungsbeispiel nicht konstant, sondern nimmt zur Bildmitte hin zu. Grundsätzlich ist die Breite B der Flanken 25, 26 nicht größer als das zweifache der maximalen Breite B1 der Flansche 18, 19 in dem Bereich, in welchem die Flanken 25, 26 mit den Flanschen 18, 19 verbunden sind.

Die Schweißpunkte 21 sind in einem gleichmäßigen Abstand A zueinander positioniert, wobei der Abstand A zweier benachbarter Schweißpunkte 21 kleiner ist als die Länge L der Flanken 25, 26.

Zur Veranschaulichung einer möglichen Weiterbildung des Erfindungsgedankens ist an der in der Bildebene linken Längsseite des Abschleppverstärkungsblechs 20 eine parabelförmige Einschnürung 27 ausgebildet. Dementsprechend haben die Flanken 28, 29 über ihre Länge L1 keine konstante Breite. Vielmehr nimmt die Breite zu ihren freien Enden hin ab und zum Tiefsten T der Einschnürung 27 hin zu. Auch hier ist die Breite B2 maximal doppelt so groß wie die mittlere Breite B1 der Flanken 28, 29. Mit B2 ist in diesem Beispiel die durchschnittliche Breite bezeichnet.

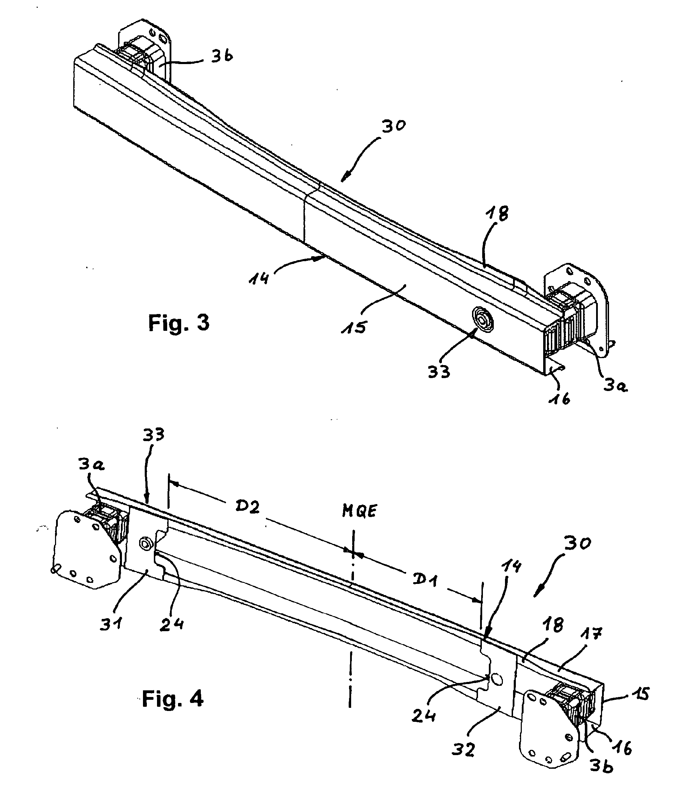

Die Figuren 3 und 4 zeigen in zwei unterschiedlichen perspektivischen Ansichten eine Stoßfängeranordnung 30, die sich lediglich durch die Gestaltung der Abschleppverstärkungsbleche 31, 32 von derjenigen der Figur 2 unterscheidet. Daher werden für den Stoßfängerquerträger und seine Komponenten die bereits eingeführten Bezugszeichen weiterhin verwendet. Es ist zu erkennen, dass bei diesem Stoßfänger 30 zwei Abschleppverstärkungsbleche 31, 32 benachbart den Deformationselementen 3a, 3b platziert sind. Nur das dem Deformationselement 3a benachbarte Abschleppverstärkungsblech 31 ist Bestandteil einer Abschleppeinrichtung 33. Das zweite Abschleppverstärkungsblech 32 ist nicht über eine Abschlepphülse mit dem Steg 15 des Stoßfängerquerträgers 14 verbunden. Da dieses Abschleppverstärkungsblech 32 keiner Abschleppbelastung unterworfen ist, befindet es sich in größerem Abstand zu dem benachbarten Deformationselement 3b. Die Abstände D1, D2 der Abschleppverstärkungsbleche 31, 32 von der Mittelquerebene MQE des Stoßfängers 14 sind erkennbar unterschiedlich. Der Abstand D2 des Abschleppverstärkungsblechs 31 der Abschleppeinrichtung 33 von der Mittelquerebene MQE ist größer als der Abstand D1 des anderen Abschleppverstärkungsblechs 32.

Dementsprechend ist die Breite der Flansche 18, 19 auf die unterschiedlichen Positionen der Abschleppverstärkungsbleche 31, 32 eingestellt.

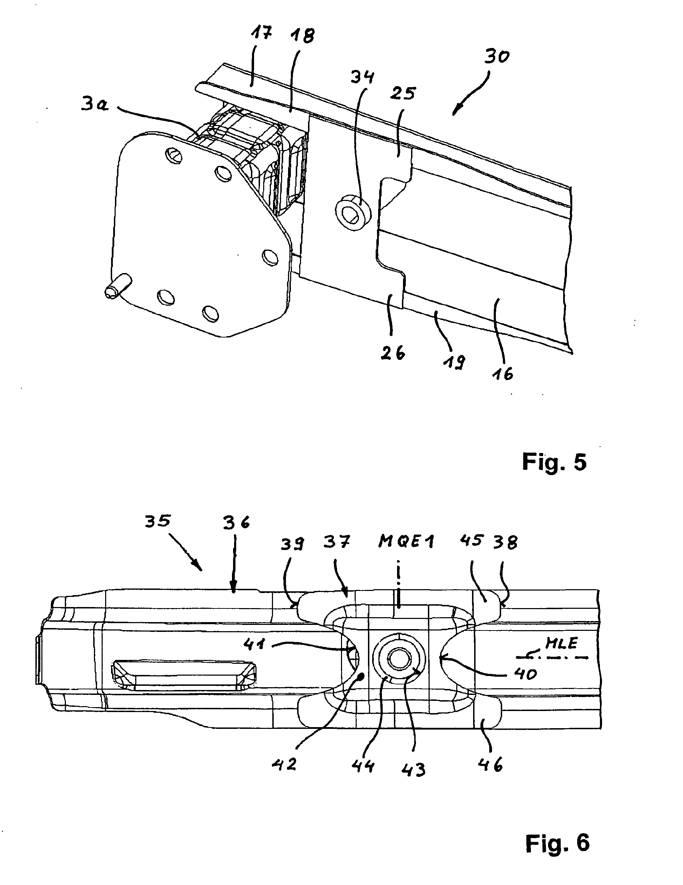

Die Abschleppverstärkungsbleche 31, 32 sind im Wesentlichen C-förmig konfiguriert und besitzen an ihren einander zugewandten Längskanten U-förmig konfigurierte Einschnürungen, wie sie hinsichtlich ihrer Abmessungen ausführlich in Figur 2 beschrieben worden sind. Im Unterschied zum Abschleppverstärkungsblech 20 der Figur 2 sind die der U-förmigen Einschnürung 24 abgewandten Längskanten gerade und ohne jegliche Einschnürung versehen. Hieraus ergibt sich die C-förmige Kontur, wie sie in vergrößerter Darstellung aus Figur 5 erkennbar ist. Figur 5 zeigt das abschleppseitige Abschleppverstärkungsblech 31 in der Einbaulage. Die Abschlepphülse durchsetzt das Abschleppverstärkungsblech 31 sowohl hinsichtlich der Breite als auch hinsichtlich der Höhe zentral. Die Flanken 25, 26 des Abschleppverstärkungsblechs 31 sind identisch denen der Ausführungsform der Figur 2. Es wird auf die dortigen Erläuterungen verwiesen.
Figur 6 zeigt abweichend von der Ausführungsform der Figuren 2 bis 5 eine weitere Variante eines Stoßfängers 35, dessen Stoßfängerquerträger 36 ebenfalls mit einem Abschleppverstärkungsblech 37 versehen ist. Das dargestellte Abschleppverstärkungsblech 37 besitzt an beiden Längskanten 38, 39 parabelförmige Einschnürungen 40, 41. Insgesamt ist das Abschleppverstärkungsblech 37 bezüglich seiner Mittelquerebene MQE1 als auch bezüglich seiner Mittellängsebene MLE spiegelsymmetrisch ausgebildet. Es ist erkennbar, dass der mittlere Bereich 42 mit der Öffnung 43 für die Abschlepphülse 44 nicht in der gleichen Raumebene liegt wie die Flanken 45, 46 des Abschleppverstärkungsblechs 37, sondern etwas in das U-förmige Profil des Stoßfängerquerträgers 36 hinein verlagert ist und in einer parallelen räumlichen Ebene zur Ebene der Flanken 45, 46 verläuft.

Dadurch kann die Abschlepphülse 44 entsprechend kürzer gestaltet sein und steht nicht über die Flansche des Stoßfängerquerträgers 36 vor.

### Bezugszeichen:

- 1 -: Stoßfänger
- 2 -: Stoßfängerquerträger
- 3 -: Deformationselement
- 3a -: Deformationselement
- 3b -: Deformationselement
- 4 -: Steg
- 5 -: Schenkel v. 4
- 6 -: Schenkel v. 4
- 7 -: Flansch v. 5
- 8 -: Flansch v. 6
- 9 -: Abschleppeinrichtung
- 10 -: Abschleppverstärkungsblech
- 11 -: Abschlepphülse
- 12 -: Stoßfänger
- 13 -: Abschleppeinrichtung
- 14 -: Stoßfängerquerträger
- 15 -: Steg
- 16 -: Schenkel v. 15
- 17 -: Schenkel v. 15
- 18 -: Flansch v. 16
- 19 -: Flansch v. 17
- 20 -: Abschleppverstärkungsblech
- 21 -: Schweißpunkt
- 22 -: Öffnung in 20
- 23 -: Längskante
- 24 -: Einschnürung in 23
- 25 -: Flanke
- 26 -: Flanke
- 27 -: Einschnürung

- 28 -: Flanke
- 29 -: Flanke
- 30 -: Stoßfänger
- 31 -: Abschleppverstärkungsblech
- 32 -: Abschleppverstärkungsblech
- 33 -: Abschleppeinrichtung
- 34 -: Abschlepphülse
- 35 -: Stoßfänger
- 36 -: Stoßfängerquerträger
- 37 -: Abschleppverstärkungsblech
- 38 -: Längskante
- 39 -: Längskante
- 40 -: Einschnürung in 38
- 41 -: Einschnürung in 39
- 42 -: Mittlerer Bereich v. 37
- 43 -: Öffnung in 42
- 44 -: Abschlepphülse
- 45 -: Flanke
- 46 -: Flanke
- A: - Abstand zw. 21
- B: - Breite v. 25, 26
- B1: - Breite v. 18, 19
- B2: - Breite v. 28, 29
- D1: - Abstand zw. MQE u. 32
- D2: - Abstand zw. MQE u. 31
- L: - Länge v. 18, 19
- L1: - Länge v. 28, 29
- MLE: - Mittellängsebene v. 37
- MQE: - Mittelquerebene v. 30
- MQE1: - Mittelquerebene v. 37
- T: - Tiefstes v. 27

## Patentansprüche

1. Stoßfänger für ein Kraftfahrzeug mit einem einschaligen, im Querschnitt U-förmig konfigurierten Stoßfängerquerträger (14, 36) mit einem Steg (15) und sich daran anschließenden Schenkeln (16, 17) und mit einer Abschlepphülse (11, 44), welche sich zwischen dem Steg (15) und einem die Schenkel (16, 17) lokal miteinander verbindenden Abschleppverstärkungsblech (20, 31, 32, 37) erstreckt, **dadurch gekennzeichnet, dass** das Abschleppverstärkungsblech (20, 31, 32, 37) im mittleren Bereich wenigstens einer seiner sich zwischen den Schenkeln (16, 17) erstreckenden Längskanten (23, 38, 39) eine Einschnürung (24, 27; 40, 41) aufweist wobei das Abschleppverstärkungsblech (20, 31, 32, 37) über mehrere im Abstand zueinander angeordnete Schweißpunkte (21) mit an den Schenkeln (16, 17) angeformten Flanschen (18, 19) verbunden ist, wobei die der Einschnürung (24, 27) benachbarten Flanken (25, 26; 28, 29) eine Länge (L, L1) aufweisen, die mindestens so groß ist, wie der Abstand (A) zwischen zwei benachbarten Schweißpunkten (21).

2. Stoßfänger nach Anspruch 1, **dadurch gekennzeichnet, dass** die über die Länge (L, L1) einer Flanke (25, 26; 28, 29) gemessene Breite (B, B2) im auf ihre Länge (L, L1) bezogenen Durchschnitt nicht größer ist, als die doppelte Breite (B1) des Flansches (18, 19), an dem sie befestigt ist.

3. Stoßfänger nach einem der Ansprüche 1 oder 2, **dadurch gekennzeichnet, dass** wenigstens eine Einschnürung (24) U-förmig konfiguriert ist.

4. Stoßfänger nach einem der Ansprüche 1 bis 3, **dadurch gekennzeichnet, dass** wenigstens eine Einschnürung (27, 40, 41) parabelförmig konfiguriert ist.

5. Stoßfänger nach einem der Ansprüche 1 bis 4, **dadurch gekennzeichnet, dass** die Flanken (25, 26; 28, 29; 45, 46) einer Längskante (23, 38, 39) die gleiche Länge (L, L1) aufweisen.

6. Stoßfänger nach einem der Ansprüche 1 bis 5, **dadurch gekennzeichnet, dass** die Flanken (25, 26; 28, 29; 45, 46) einer Längskante (23, 38, 39) die gleiche Breite (B, B2) aufweisen.

7. Stoßfänger nach einem der Ansprüche 1 bis 6, **dadurch gekennzeichnet, dass** die Flansche (18, 19) im Anbindungsbereich der Abschleppverstärkungsbleche (20, 31, 32, 37) verbreitert ausgeführt sind.

8. Stoßfänger nach einem der Ansprüche 1 bis 7, **dadurch gekennzeichnet, dass** an einem Stoßfängerquerträger (14) zwei Abschleppverstärkungsbleche spiegelsymmetrisch zur Mittelquerebene (MQE) des Stoßfängerquerträgers (14) angeordnet sind.

9. Stoßfänger nach einem der Ansprüche 1 bis 7, **dadurch gekennzeichnet, dass** an einem Stoßfängerquerträger (14) zwei Abschleppverstärkungsbleche (31, 32) in unterschiedlichen Abständen (D1, D2) zur Mittelquerebene (MQE) des Stoßfängerquerträgers (14) angeordnet sind.

## Claims

1. Bumper for a motor vehicle, with a single-shell bumper crossmember (14, 36) which is of U-shaped configuration in cross section and has a web (15) and adjoining limbs (16, 17), and with a towing sleeve (11, 44) which extends between the web (15) and a towing reinforcement plate (20, 31, 32, 37) connecting the limbs (16, 17) locally to each other, **characterized in that** the towing reinforcement plate (20, 31, 32, 37) has a constriction (24, 27; 40, 41) in the central region of at least one of its longitudinal edges (23, 38, 39) extending between the limbs (16, 17), the towing reinforcement plate (20, 31, 32, 37) being connected via a plurality of welding points (21) arranged at a distance from one another to flanges (18, 19) integrally formed on the limbs (16, 17), and the flanks (25, 26; 28, 29) which are adjacent to the constriction (24, 27) being of a length (L, L1) which is at least as large as the distance (A) between two adjacent welding points (21).

2. Bumper according to Claim 1, **characterized in that** the width (B, B2), as measured over the length (L, L1) of a flank (25, 26; 28, 29), is not greater in the section related to its length (L, L1) than twice the width (B1) of the flange (18, 19) to which it is fastened.

3. Bumper according to either of Claims 1 and 2, **characterized in that** at least one constriction (24) is of U-shaped configuration.

4. Bumper according to one of Claims 1 to 3, **characterized in that** at least one constriction (27, 40, 41) is of parabolic configuration.

5. Bumper according to one of Claims 1 to 4, **characterized in that** the flanks (25, 26; 28, 29; 45, 46) of a longitudinal edge (23, 38, 39) have the same length (L, L1).

6. Bumper according to one of Claims 1 to 5, **characterized in that** the flanks (25, 26; 28, 29; 45, 46) of a longitudinal width (23, 38, 39) have the same width (B, B2).

7. Bumper according to one of Claims 1 to 6, **characterized in that** the flanges (18, 19) are of widened design in the connecting region of the towing reinforcement plates (20, 31, 32, 37).

8. Bumper according to one of Claims 1 to 7, **characterized in that** two towing reinforcement plates are arranged on a bumper crossmember (14) mirror-symmetrically with respect to the central transverse plane (MQE) of the bumper crossmember (14).

9. Bumper according to one of Claims 1 to 7, **characterized in that** two towing reinforcement plates (31, 32) are arranged on a bumper crossmember (14) at different distances (D1, D2) from the central transverse plane (MQE) of the bumper crossmember (14).

## Revendications

1. Pare-chocs pour un véhicule automobile, comprenant un support transversal de pare-chocs (14, 36) monocoque, configuré avec une section en forme de U, présentant une âme (15) et des branches (16, 17) qui s'y raccordent, et comprenant une douille de remorquage (11, 44) qui s'étend entre l'âme (15) et une tôle de renforcement de remorquage (20, 31, 32, 37) qui relie localement les branches (16, 17) l'une à l'autre, **caractérisé en ce que** la tôle de renforcement de remorquage (20, 31, 32, 37) présente, dans la zone médiane de l'une au moins de ses arêtes longitudinales (23, 38, 39) qui s'étend entre les branches (16, 17), un rétrécissement (24, 27 ; 40, 41), dans lequel la tôle de renforcement de remorquage (20, 31, 32, 37) est relié à des brides (18, 19) conformées sur les branches (16, 17) via plusieurs points de soudure (21) agencés à distance les uns des autres, et dans lequel les flancs (25, 26 ; 28, 29) voisins du rétrécissement (24, 27) présentent une longueur (L, L1) qui est au moins aussi grande que la distance (A) entre deux points de soudure voisins (21).

2. Pare-chocs selon la revendication 1, **caractérisé en ce que** la largeur (B, B2) mesurée sur la longueur (L, L1) d'un flanc (25, 26 ; 28, 29), en moyenne par rapport à sa longueur (L, L1), n'est pas plus grande que le double de la largeur (B1) de la bride (18, 19) à laquelle elle est fixée.

3. Pare-chocs selon l'une des revendications 1 ou 2, **caractérisé en ce qu'**au moins un rétrécissement (24) est configuré en forme de U.

4. Pare-chocs selon l'une des revendications 1 à 3, **caractérisé en ce qu'**au moins un rétrécissement (27, 40, 41) est configuré en forme de parabole.

5. Pare-chocs selon l'une des revendications 1 à 4, **caractérisé en ce que** les flancs (25, 26 ; 28, 29 ; 45, 46) d'une arête longitudinale (23, 38, 39) présentent la même longueur (L, L1).

6. Pare-chocs selon l'une des revendications 1 à 5, **caractérisé en ce que** les flancs (25, 26 ; 28, 29 ; 45, 46) d'une arête longitudinale (23, 38, 39) présentent la même largeur (B, B2).

7. Pare-chocs selon l'une des revendications 1 à 6, **caractérisé en ce que** les brides (18, 19) sont réalisées de façon élargie dans la zone de jonction des tôles de renforcement de remorquage (20, 31, 32, 37).

8. Pare-chocs selon l'une des revendications 1 à 7, **caractérisé en ce que** deux tôles de renforcement de remorquage sont agencées sur un support transversal de pare-chocs (14) avec symétrie plane par rapport au plan transversal médian du support transversal de pare-chocs (14).

9. Pare-chocs selon l'une des revendications 1 à 7, **caractérisé en ce que** deux tôles de renforcement de remorquage (31, 32) sont agencées sur un support transversal de pare-chocs (14) à des distances différentes (D1, D2) par rapport au plan transversal médian du support transversal de pare-chocs (14).
